# EUROPÄISCHE PATENTSCHRIFT

(11) **EP 3 772 968 B1**
(45) Veröffentlichungstag und Bekanntmachung des Hinweises auf die Patenterteilung: **20.11.2024**
(21) Anmeldenummer: 18715635.1
(22) Anmeldetag: 29.03.2018
(51) Int. Cl.: A22C 21/00

(54) **ANORDNUNG UND VERFAHREN ZUM ENTHÄUTEN VON DIE GEFLÜGELBRUST ENTHALTENDEN GEFLÜGELTEILEN**
ARRANGEMENT AND METHOD FOR SKINNING POULTRY PARTS CONTAINING THE POULTRY BREAST
AGENCEMENT ET PROCÉDÉ DE DÉPOUILLEMENT DE PARTIES DE VOLAILLE CONTENANT LA POITRINE DE VOLAILLE

(43) Veröffentlichungstag der Anmeldung: 17.02.2021
(73) Patentinhaber: Nordischer Maschinenbau Rud. Baader GmbH + Co. KG, 23560 Lübeck (DE)
(72) Erfinder: SCHULZE, Adrian, 23564 Lübeck (DE)
(74) Vertreter: Stork Bamberger Patentanwälte PartmbB
(86) Internationale Anmeldenummer: PCT/EP2018/058206
(87) Internationale Veröffentlichungsnummer: WO 2019/185155

(56) Entgegenhaltungen:
- EP-A1- 1 574 133
- EP-A1- 3 041 361
- EP-A1- 3 068 229
- EP-B1- 3 041 361
- EP-B1- 3 068 229
- US-A- 4 723 339

## Beschreibung

Die vorliegende Erfindung betrifft eine Anordnung zum Enthäuten von die Geflügelbrust enthaltenden Geflügelteilen, mit einer Fördereinrichtung, die zum Fördern der Geflügelteile in Förderrichtung längs einer Enthäuteeinrichtung ausgebildete Sattelelemente umfasst, und die Enthäuteeinrichtung mindestens eine rotierend angetriebene profilierte Walze sowie ein Führungselement umfasst, wobei die Walze zusammen mit einer Einzugskante des Führungselements eingerichtet ist, einen Einzugsspalt zum geflügelbrustseitigen Fassen der Haut zu bilden, wobei das Führungselement jeweils zur seitlichen Führung des Geflügelteils eingerichtete Flankenführungselemente umfasst, und wobei die Flankenführungselemente zur Anlage am Muskelfleisch des Geflügelteils eingerichtete Innenführungsflächen aufweisen.

Des Weiteren betrifft die Erfindung ein Verfahren zum Enthäuten von die Geflügelbrust enthaltenden Geflügelteilen, umfassend die Schritte: Fördern der Geflügelteile in Förderrichtung längs einer Enthäuteeinrichtung mittels Sattelelementen einer Fördereinrichtung, rotierendes Antreiben mindestens einer profilierten Walze, wobei die Walze zusammen mit einer Einzugskante eines Führungselements einen Einzugsspalt zum geflügelbrustseitigen Fassen der Haut bildet, selbsttätiges Fassen der Haut mittels des Einzugsspalts, und jeweils seitliches Führen des Geflügelteils mittels Flankenführungselementen durch Anlage von Innenführungsflächen am Muskelfleisch des Geflügelteils. Derartige Anordnungen und Verfahren kommen bei der maschinellen Geflügelverarbeitung zum Einsatz. Vor dem Filetieren von Geflügelschlachtkörpern sind diese zu enthäuten. So werden zum Enthäuten von Geflügel-Brustkappen und Vorderhälften in Filetiermaschinen Enthäuter eingesetzt, die mittels einer Walze und einem feststehenden Klemmschuh die Haut von den Filets abziehen.

Solche Enthäuter sind beispielsweise aus dem Dokument US 2011/092146 A1 bekannt. Die eingangs genannte Anordnung sowie das eingangs genannte Verfahren gehen auch aus dem Dokument EP 3 041 361 A1 hervor.

Nachteilig bei den bekannten Enthäutern und Enthäuteverfahren ist, dass die Entfernung der Haut nicht zuverlässig und vollständig erfolgt. Insbesondere das Enthäuten von Geflügel-Brustkappen sowie Geflügel-Vorderhälften gestaltet sich aufgrund spezieller anatomischer Gegebenheiten schwierig. So ist die Haut im Bereich der Atmungsfalte mit der Geflügelkarkasse verwachsen. Dies sorgt dafür, dass sich die Haut nicht vollständig löst und/oder nicht kontrolliert von dem Geflügelkörper trennen lässt.

Das Problem von an den Filets verbleibenden Hautbestandteilen kann beispielsweise durch das Durchführen von hierfür geeigneten Bearbeitungsschritten gelöst werden. Die mit dem Filet verwachsene Haut wird auf diese Weise einfach abgetrennt. Jedoch ist einerseits ein weiterer Bearbeitungsschritt erforderlich und andererseits entsteht ein Ausbeuteverlust, da durch den Besäumschnitt die Filetgröße reduziert wird.

Es ist daher Aufgabe der vorliegenden Erfindung, eine Anordnung vorzuschlagen, die ein vollständiges automatisches Entfernen der Geflügelhaut mit hoher Zuverlässigkeit gewährleistet. Des Weiteren besteht die Aufgabe darin, ein entsprechendes Verfahren vorzuschlagen.

Die Aufgabe wird durch eine Anordnung mit den eingangs genannten Merkmalen dadurch gelöst, dass die Flankenführungselemente jeweils zum Trennen der Verbindung zwischen der Haut und dem Geflügelteil eingerichtete Schneidmittel umfassen.

Die mit dem Muskelfleisch in Kontakt kommenden Innenführungsflächen unterstützen den Ablösevorgang der Haut von dem Geflügelschlachtkörper, bis die Haut nur noch mit dem Geflügelschlachtkörper im Bereich der Atmungsfalte verbunden ist. Durch die exakte Führung erfolgt, erst nachdem sämtliche Bereiche der Haut vom Geflügelkörper gelöst worden sind, ein endgültiges kontrolliertes Trennen der Haut vom Geflügelkörper.

Das erfindungsgemäße Führungselement mit den Flankenführungselementen ist eingerichtet, die Geflügelkörper beim Passieren des Führungselements zusätzlich derart anzuheben, dass sich der Abstand zu der Walze vergrößert. Auf diese Weise wird zu der schon durch die rotierend angetriebene Walze erzeugte Zugkraft eine zusätzliche das Lösen der Haut unterstützende Kraft ausgeübt. Kurz bevor der Geflügelschlachtkörper bzw. das Geflügelteil das erfindungsgemäße Führungselement vollständig passiert hat, erreicht dieses die höchste Position mit größtem Abstand zu der Walze. Die Geflügelhaut wird in dieser Position maximal durch die genannten einwirkenden Kräfte vorgespannt und im Zuge dessen von der Geflügelkarkasse endgültig und weitestgehend vollständig abgelöst.

Das Führungselement ist vorzugsweise als Formkörper, beispielsweise als Hohl- oder Vollkörper ausgebildet. Insbesondere ist das Führungselement einstückig ausgebildet. Das Führungselement ist beispielsweise aus dem Vollen gefräst oder bei 3D-Druck gefertigt.

Erfindungsgemäß umfassen die Flankenführungselemente jeweils zum Trennen der Verbindung zwischen der Haut und dem Geflügelteil eingerichtete Schneidmittel. Die Schneidmittel ermöglichen ein präzises und exaktes Durchtrennen der Haut, die mit der Geflügelkarkasse im Bereich der Atmungsfalte verwachsen ist. Durch Verwendung der erfindungsgemäßen Schneidmittel kommt es nicht zu einem Abreißen der Haut von der Geflügelkarkasse, sondern zu einer kontrollierten und exakt reproduzierbaren Durchtrennung der Hautverbindung. Vorzugsweise sind daher die Schneidmittel ausgangsseitig, dem Führungselement bezüglich der Förderrichtung nachgeordnet, angeordnet.

Eine zweckmäßige Ausgestaltung der Erfindung ist dadurch gekennzeichnet, dass die Flankenführungselemente jeweils zum Führen der geflügelteilseitig verbundenen Haut eingerichtete Außenführungsflächen umfassen, wobei die Außenführungsflächen sich jeweils zwischen der Einzugskante und einer Trennkante, an der jeweils die Innenführungsfläche an die Außenführungsführungsfläche grenzt, erstrecken.

Die Außenführungsflächen bilden so zusätzlich Leitflächen zum definierten Führen der abgelösten Hautbereiche. Das Führungselement gelangt auf diese Weise während des Enthäutevorgangs zwischen die zu entfernende Haut und das Muskelfleisch. Die Innenführungsflächen dienen dabei im Wesentlichen zum Führen des Geflügelschlachtkörpers, während die Außenführungsflächen zum Führen und Leiten der Geflügelhaut ausgebildet und eingerichtet sind. Die Außenführungsflächen sind insbesondere dazu eingerichtet, die Haut in den Einzugsspalt der Enthäuteeinrichtung zu leiten und gleichzeitig ein Vorspannen der Haut zu bewirken, so dass die Haut unter stetiger Zugkraftbeaufschlagung vom Geflügelkörper abgelöst und schließlich auch an der bis zum Schluss vorhandenen Verbindung mit dem Geflügelkörper im Bereich der Atmungsfalte präzise gelöst wird.

Eine vorteilhafte Weiterbildung zeichnet sich dadurch aus, dass die Innenführungsflächen mit ihrer Trennkante jeweils zumindest im Wesentlichen konkav gekrümmt sind. Durch die Konkavität der Innenführungsflächen schmiegen sich diese optimal an die Filets des Geflügelschlachtkörpers an und gewährleisten so eine präzise Führung und Stützung des Geflügelteils während des Enthäutens. Weiter bevorzugt ist die Geometrie der Innenführungsflächen an die Durchschnittsgeometrie der zu verarbeitenden Geflügelteile angepasst. Die Innenführungsflächen können vollständig konkav oder aber im Wesentlichen konkav gekrümmt sein. Auch in unterschiedliche Raumrichtungen mehrfach konkav gekrümmte Innenflächengeometrien sind einsetzbar.

Gemäß einer weiteren bevorzugten Ausführungsform umfasst das Führungselement eine zwischen den Innenführungsflächen angeordnete Anlagefläche, wobei die Anlagefläche ausgehend von der Einzugskante eine um einen Winkel α gegenüber einer Walzentangentiale geneigte Auflauframpe bildet. Die Anlagefläche bietet den Vorteil, dass das Geflügelteil in einem gewissen Maß elastisch gestaucht und komprimiert wird. Dies begünstigt einerseits den Ablösevorgang der Haut und führt andererseits dazu, dass das Geflügelteil bezüglich seiner Höhenlage zu der Fördereinrichtung verändert, nämlich angehoben wird. Dies bewirkt ein Führen der Haut weg von der Walze, wodurch die Haut weiter elastisch gespannt wird und die Ablösekräfte sich entsprechend erhöhen. Die Ablösekräfte erreichen so Größenordnungen, die ausreichen, um die im Bereich der Atmungsfalte verwachsene Haut endgültig zu lösen.

Eine weitere zweckmäßige Ausgestaltung der Erfindung ist dadurch gekennzeichnet, dass die Trennkante jeweils seitlich an die Anlageflächen nahtlos anschließt. So wird eine absatz- und vorsprungsfreie, möglichst glatte zusammenhängende Leitfläche gebildet, die einerseits ein möglichst widerstandsarmes Führen des Geflügelteils ermöglicht und zugleich Schäden durch mechanische Einwirkung an den Geflügelfilets vermeidet.

Gemäß einer weiteren bevorzugten Ausbildung der Erfindung ist die Anlageflächenkante der Anlagefläche unmittelbar an die Einzugskante angrenzend eingerichtet. Vorteilhafterweise wird so das "Einfädeln" der Haut in den Einzugsspalt durch eine definierte Einzugskante unterstützt und unmittelbar nach dem Fassen der Haut die zu beschriebene Stauchung und Kompression unter gleichzeitigem Heben des Geflügelteils bewirkt. Hierdurch wird sichergestellt, dass das erfindungsgemäße Führungselement zwischen die zu entfernende Haut und dem restlichen Geflügelschlachtkörper gleitet und, dass die aufgrund der Förderbewegung nachfolgende Haut in den Einzugsspalt geleitet wird.

Eine weitere zweckmäßige Ausbildung der Erfindung ist dadurch gekennzeichnet, dass die Flankenführungselemente derart ausgebildet sind, dass die lichte Weite zwischen den Innenführungsflächen sich in der Förderrichtung verjüngt. Dies bewirkt eine zusätzliche seitliche an den Flanken des Geflügelteils bzw. des Geflügelschlachtkörpers einwirkende Kompression. Zugleich liegt die Innenführungsfläche unter leichtem Andruck geschlossen im Flankenbereich des Geflügelschlachtkörpers auf dem Muskelfleisch an und unterstützt so die Hautablösewirkung.

Eine bevorzugte Weiterbildung der Erfindung zeichnet sich dadurch aus, dass die Innenführungsflächen der Flankenführungselemente jeweils eine Endkante aufweisen, wobei jeweils die Endkante einer der Innenführungsflächen kürzer als der jeweilige Abschnitt der Trennkante derselben Innenführungsfläche ist. Die Trennkante, die eingerichtet ist, zwischen Haut und den das Muskelfleisch umfassenden Geflügelkörper zu gelangen, definiert einen Eintrittsquerschnitt des erfindungsgemäßen Führungselements. Der Eintrittsquerschnitt bezeichnet die freie Querschnittsfläche, die aus Sicht des Geflügelkörpers zunächst einen freien Durchgang beim Einlauf in das Führungselement bildet. Die Endkanten definieren den Austrittsquerschnitt des erfindungsgemäßen Führungselements, also diejenige Querschnittsfläche, die beim Austritt des Geflügelkörpers aus dem Wirkungsbereich des Führungselements zur Verfügung steht. Die gewählte Relation der jeweiligen Längen von Endkanten und Trennkante führt dazu, dass sich der freie Querschnitt entlang der Passagenstrecke des Geflügels stetig verringert, um die zuvor beschriebenen Effekte zu erzielen.

Gemäß einer weiteren bevorzugten Ausbildung der Erfindung ist jede der Innenführungsflächen als Hüllfläche ausgebildet, die sich zwischen der Endkante und der Trennkante der jeweiligen Innenführungsfläche aufspannt. Die Hüllfläche bildet eine möglichst glatte Stützfläche, die ein möglichst widerstandsarmes Herübergleiten der Muskelfleischflächen des Geflügelteils ermöglicht.

Eine weitere zweckmäßige Ausbildung der Erfindung ist dadurch gekennzeichnet, dass die Trennkante, die Anlageflächenkanten und/oder die Endkanten abgerundet ausgebildet sind. Die Abrundungen bewirken eine Verminderung des Risikos andernfalls möglicher Schäden des Muskelfleischgewebes. Zudem wirkt sich insbesondere die Abrundung der Trennkante positiv auf das Einfädelverhalten der Haut in den Einzugsspalt aus. Trifft die Haut erstmals auf die Trennkante wird diese an der stumpfen Trennkante kurzfristig gestaucht, so dass diese von der Walze erfasst und zuverlässig in den Einlaufspalt gezogen wird. Das Muskelfleisch wird über die abgerundete Trennkante zuverlässig zu den Innenführungsflächen bzw. zur Anlagefläche geleitet. Das Abrunden der Anlageflächenkanten und/oder der Endkanten sorgt für ein gutes Gleitverhalten der darüber geführten Haut. So wird ein unerwünschtes Einreißen oder Beschädigungen der Haut zuverlässig vermieden, die andernfalls zu einem unkontrollierten Abreißen der Haut führen könnten und sich negativ auf das Ablöseergebnis auswirken könnten.

Gemäß einer weiteren bevorzugten Ausführungsform ist die Walze mittels eines Antriebsaggregats derart angetrieben, dass die Umfangsgeschwindigkeit der Walze größer als die Fördergeschwindigkeit der Fördereinrichtung ist. Anders ausgedrückt ist die Einzugsgeschwindigkeit, mit der die Haut in den Einzugspalt gezogen wird, größer als die Geschwindigkeit, mit der die Geflügelteile in der Förderrichtung gefördert werden. Die Haut läuft gegenüber der Geflügelkarkasse vor. Hierdurch wird die Haut elastisch vorgespannt, was den Ablösevorgang weiter unterstützt.

Eine weitere zweckmäßige Ausgestaltung der Erfindung ist dadurch gekennzeichnet, dass die Walze im Bereich der Flankenführungselemente eine gegenüber ihrer Drehachse geneigte Mantelflächenprofilierung aufweist. Das Mantelflächenprofil ist also in dem genannten Bereich bezüglich der Umfangsrichtung der Walze schräg gestellt eingerichtet. Auf die Haut wirkt daher nicht nur eine Zugkraft in Umfangsrichtung der Walze ein, sondern eine zusätzliche Kraftkomponente senkrecht zu der Umfangsrichtung bzw. parallel zu der Drehachse der Walze. Mittels dieser Querkraftkomponente ist es möglich, die Haut möglichst flächig über den Walzenumfang auszubreiten und möglichst flächig auf dieser zu verteilen, um die Ablösewirkung insgesamt zu unterstützen. Gemäß einer weiteren bevorzugten Ausbildung der Erfindung sind die Mantelflächenprofilierungen im Bereich der Flankenführungselemente jeweils zu den Stirnseiten der Walze entgegen der Drehrichtung der Walze geneigt. Vorteilhafterweise wird so die Haut nach außen, nämlich zu den Walzenseiten bzw. den Stirnseiten der Walze geleitet. Hierdurch kann einer Verstopfung des Einzugsspalts durch sich ansammelnde Haut zuverlässig entgegengewirkt werden.

Eine bevorzugte Weiterbildung der Erfindung zeichnet sich dadurch aus, dass die Walze im Bereich der die Auflauframpe bildende Anlagefläche eine parallel zu der Drehachse der Walze ausgerichtete Mantelflächenprofilierung aufweist. Dies wirkt sich positiv auf den Einzugsvorgang beim ersten Kontakt der Haut mit dem Einzugsspalt aus. Durch die genannte Ausrichtung der Mantelflächenprofilierung wird die Haut ausschließlich in Umfangsrichtung der Walze in den Einzugsspalt gezogen und somit ein möglichst rasches Fassen der Haut in dem Einzugsspalt gewährleistet. Erst wenn sich ausreichend Haut im Einzugsspalt befindet, so dass diese sicher zwischen Walze und Einzugskante gefasst wird, wird die Haut mittels der Mantelflächenprofilierung im Bereich der Flankenführungselemente flächig ausgebreitet, um ein Verstopfen durch eine zu große Hautansammlung in dem Einzugsspalt zu verhindern.

Gemäß einer weiteren bevorzugten Ausführungsform ist die Enthäuteeinrichtung relativ zu der Fördereinrichtung federnd ausweichlich gelagert angeordnet. Dies ermöglicht die Verarbeitung unterschiedlich großer Geflügelschlachtkörper und Geflügelteile. Durch federndes Ausweichen der Enthäuteeinrichtung wird die zuvor beschriebene Stauchung und Kompression des Geflügelteils auf vorgegebene Maximalwerte begrenzt. Passieren beispielsweise Geflügelteile geringer Größe das Führungselement, so ist ein Ausweichen der Enthäuteeinrichtung nicht oder nur in sehr geringem Maß erforderlich. Das Passieren eines größeren Geflügelteils könnte dazu führen, dass die Kompressions- und Stauchwirkung durch das Führungselement zu groß werden würde. Die federnd ausweichliche Lagerung der Enthäuteeinrichtung lässt in diesem Fall ein Ausweichen gegen Federkraft in gewissem Maß zu, so dass die maximal vorgegebenen und auf das zu enthäutende Geflügelteil einwirkenden Kräfte eingehalten werden.

Eine bevorzugte Weiterbildung der Erfindung zeichnet sich dadurch aus, dass jedes der Schneidmittel eine Schneidkante aufweist, die gegenüber der Förderrichtung geneigt ausgebildet ist. Diese Schrägstellung der Schneidkante reduziert die auf die Hautverbindung einwirkenden Schneidkräfte und führt so zu einem behutsameren Durchtrennen der Hautverbindung, was sich positiv auf die Reproduzierbarkeit und die Exaktheit des Trennschnitts auswirkt.

Gemäß einer weiteren bevorzugten Ausführungsform ist die Schneidkante sichelförmig ausgebildet. Auf diese Weise wird sichergestellt, dass die Hautverbindung in jedem Fall eindeutig durchtrennt wird. Aufgrund der Sichelform "verfängt" sich die Haut im konkaven Teil der Schneidkante. Ein etwaiges "Herüberrutschen" über die Schneidkante ohne tatsächliche Durchtrennung ist damit ausgeschlossen, so dass der Trennschnitt mit hoher Zuverlässigkeit und Präzision ausgeführt wird.

Eine weitere zweckmäßige Ausgestaltung der Erfindung ist dadurch gekennzeichnet, dass die Schneidkanten jeweils beidseitig angefast ausgebildet sind. Die beidseitig angefasten Schneidkanten bewirken ein verbessertes Selektionsverhalten der Schneidmittel, indem die Schneidkanten eine zusätzliche Leitfunktion aufweisen. Insbesondere werden Schädigungen des Muskelfleisches durch unerwünschte Einschnitte in dieses ausgeschlossen.

Gemäß einer weiteren bevorzugten Ausbildung der Erfindung sind die Schneidmittel quer zu der Förderrichtung federnd ausweichlich gelagert. Die vorliegende Erfindung ist daher für die Verarbeitung von Geflügel unterschiedlicher Anatomie und Größe angepasst. Die Schneidmittel sind aufgrund der genannten ausweichlichen Lagerung selbstadaptierend eingerichtet und passen sich an die jeweilige Breite der Geflügelteile automatisch an.

Des Weiteren wird die Aufgabe durch ein entsprechendes Verfahren mit den eingangs genannten Merkmalen gelöst durch Trennen der verbleibenden Verbindung zwischen der Haut und dem Geflügelteil mittels Schneidmitteln, wobei das Trennen ausgangsseitig, also unmittelbar bevor das Geflügelteil das Führungselement vollständig passiert hat, erfolgt.

Eine bevorzugte Weiterbildung der Erfindung zeichnet sich dadurch aus, dass durch Führen der geflügelteilseitig verbundenen Haut mittels Außenführungsflächen der Flankenführungselemente, die sich jeweils zwischen der Einzugskante und einer Trennkante, an der jeweils die Innenführungsfläche an die Außenführungsführungsfläche grenzt, erstrecken.

Gemäß einer vorteilhaften Weiterbildung des erfindungsgemäßen Verfahrens ist vorgesehen, zumindest Teilbereiche des Geflügelteils durch Fördern desselben über eine Auflauframpe elastisch zu stauchen, wobei die Auflauframpe durch eine zwischen den Innenführungsflächen angeordnete Anlagefläche gebildet ist, und wobei die Anlagefläche der Auflauframpe ausgehend von der Einzugskante um einen Winkel α gegenüber einer Walzentangentiale geneigt ist.

Eine weitere zweckmäßige Ausbildung zeichnet sich durch seitliches Stauchen des Geflügelteils quer zu der Förderrichtung mittels der Flankenführungselemente, deren lichte Weite zwischen den Innenführungsflächen sich in Förderrichtung verjüngt, aus.

Gemäß einer weiteren bevorzugten Ausführungsform wird die Walze mittels eines Antriebsaggregats angetrieben, so dass die Umfangsgeschwindigkeit der Walze größer als die Fördergeschwindigkeit der Fördereinrichtung ist.

Eine vorteilhafte Variante des erfindungsgemäßen Verfahrens zeichnet sich dadurch aus, dass das Abziehen der Haut zumindest mit einer Teilkomponente in Richtung der Stirnseiten der Walze mittels einer Mantelflächenprofilierung der Walze im Bereich der Flankenführungselemente erfolgt, die gegenüber der Drehachse der Walze geneigt ausgerichtet ist.

Weiter bevorzugt wird die Haut in den Einzugsspalt im Bereich der Auflauframpe in Umlaufrichtung der Walze mittels einer parallel zu der Drehachse der Walze ausgerichteten Mantelflächenprofilierung eingezogen.

Gemäß einer bevorzugten Ausführungsform weicht die Enthäuteeinrichtung relativ zu der Fördereinrichtung beim Passieren eines der Geflügelkörper federnd aus.

Gemäß einer weiteren bevorzugten Ausführungsform erfolgt das Trennen mittels Schneidmitteln, die eine gegenüber der Förderrichtung geneigte Schneidkante aufweisen.

Gemäß einer weiteren bevorzugten Ausbildung der Erfindung weichen die Schneidmittel quer zu der Förderrichtung federnd aus.

Die mit dem erfindungsgemäßen Verfahren verbunden Vorteile entsprechend den mit der erfindungsgemäßen Anordnung erzielten und bereits zuvor beschriebenen Vorteilen in analoger Weise. Zur Vermeidung von Wiederholungen wird daher im Zusammenhang mit dem erfindungsgemäßen Verfahren auf die bereits mit der erfindungsgemäßen Anordnung genannten Vorzüge verwiesen.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine schematische Darstellung der erfindungsgemäßen Anordnung in perspektivischer Ansicht,
- Fig. 2: eine perspektivische Ansicht der erfindungsgemäßen Enthäuteeinrichtung,
- Fig. 3: eine Frontansicht der in Fig. 2 gezeigten Enthäuteeinrichtung mit Blickrichtung in Förderrichtung,
- Fig. 4: eine perspektivische Ansicht des erfindungsgemäßen Führungselements gemäß einer ersten Ausführungsform,
- Fig. 5: eine perspektivische Ansicht des erfindungsgemäßen Führungselements gemäß einer zweiten Ausführungsform,
- Fig. 6: das in Fig. 5 gezeigte Führungselement aus einer weiteren Blickrichtung,
- Fig. 7: eine perspektivische Ansicht des erfindungsgemäßen Führungselements gemäß einer dritten Ausführungsform und
- Fig. 8: eine perspektivische Ansicht des erfindungsgemäßen Führungselements gemäß einer vierten Ausführungsform.

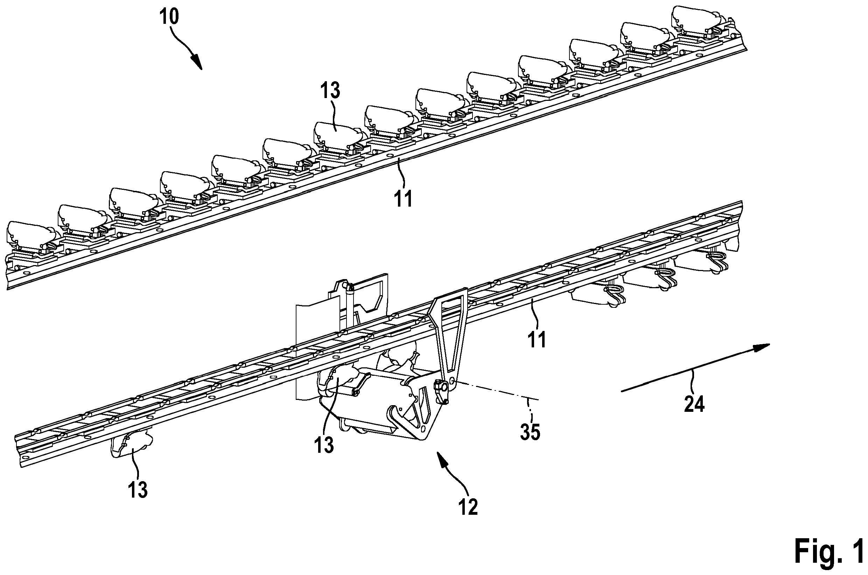

Fig. 1 zeigt eine schematische Darstellung der erfindungsgemäßen Anordnung 10 in perspektivischer Ansicht. Die Anordnung 10 ist zum Enthäuten von - in der Zeichnung nicht dargestellten - die Geflügelbrust enthaltenden Geflügelteilen ausgebildet und eingerichtet. Die Geflügelteile sind vorzugsweise Geflügel-Brustkappen oder Vorderhälften von Geflügelschlachtkörpern. Die zu entfernende Geflügelhaut liegt in der Regel über dem Brustfilet, ist jedoch nicht fest mit diesem verwachsen. Im Bereich der Atmungsfalte, jeweils an den Flanken der Geflügelkarkasse, ist die Haut mit der Geflügelkarkasse verwachsen.

Die erfindungsgemäße Anordnung 10 umfasst eine Fördereinrichtung 11, die zum Fördern der Geflügelteile in Förderrichtung 24 ausgebildet und eingerichtet ist. Entlang der von der Fördereinrichtung 11 gebildeten Förderstrecke ist einer Enthäuteeinrichtung 12 angeordnet. Die Fördereinrichtung 11 umfasst Sattelelemente 13, die zur Aufnahme der Geflügelteile ausgebildet und eingerichtet sind.

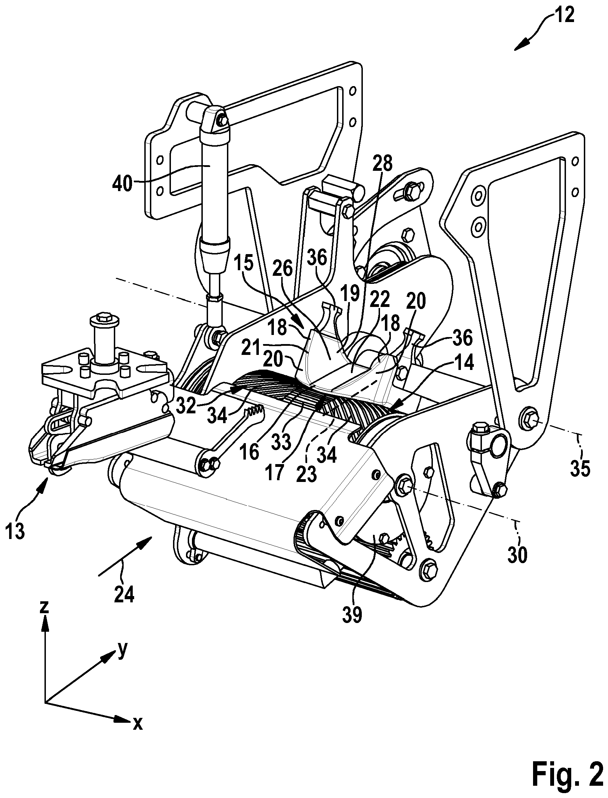

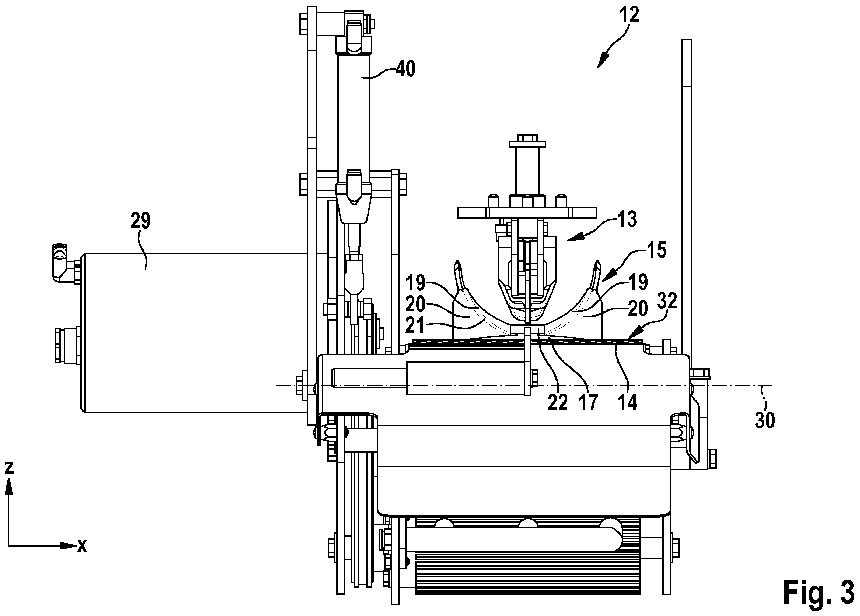

Die Figuren 2 und 3 zeigen die erfindungsgemäße Enthäuteeinrichtung 12 im Detail in verschiedenen Ansichten. In beiden Figuren ist aus Gründen der besseren Übersichtlichkeit jeweils nicht die gesamte Förderrichtung 11 gezeigt, sondern jeweils nur eines der Sattelelemente 13 dargestellt.

Die Enthäuteeinrichtung 12 umfasst eine rotierend angetriebene profilierte Walze 14 sowie ein Führungselement 15. Die Walze 14 bildet zusammen mit einer Einzugskante 16 des Führungselements 15 einen Einzugsspalt 17 zum geflügelbrustseitigen Fassen der Haut. Durch den Einzug der Geflügelhaut in den Einzugsspalt 17 wird diese von dem Geflügelteil abgezogen.

Das Führungselement 15 umfasst jeweils zur seitlichen Führung des Geflügelteils eingerichtete Flankenführungselemente 18. Die Flankenführungselemente 18 sind zur Anlage am Muskelfleisch des Geflügelteils eingerichtet, d. h. während die Geflügelhaut über die profilierte Walze 14 abgezogen wird, kommen die Flankenführungselemente 18 unmittelbar mit dem darunterliegenden Muskelfleisch der Brustfilets in Kontakt. Die Flankenführungselemente 18 weisen hierzu jeweils Innenführungsflächen 19 auf. Die Flankenführungselemente 18 haben daher eine Führungs- und Leitfunktion, um den Geflügelkörper definiert zu führen und an der Walze 14 vorbeizuführen, ohne dass Teile des Geflügelkörpers - mit Ausnahme der Haut - in Kontakt mit der Walze 14 gelangen.

Vorzugsweise umfassen die Flankenführungselemente 18 jeweils zum Führen der geflügelteilseitig verbundenen Haut eingerichtete Außenführungsflächen 20, wobei die Außenführungsflächen 20 sich jeweils zwischen der Einzugskante 16 und einer Trennkante 21, an der jeweils die Innenführungsfläche 19 an die Außenführungsführungsfläche 20 grenzt, erstrecken. Die Geflügelhaut wird durch das Zusammenwirken der rotierend angetriebenen profilierten Walze 14 und jeweils seitlich über die Flankenführungselemente 18 über die Trennkante 21 gezogen. Anschaulich beschrieben "umfließt" die Geflügelhaut das Führungselement 15 seitlich und wird über den Einzugsspalt 17 von dem Geflügelteil abgezogen.

Vorteilhafterweise sind die Innenführungsflächen 19 mit ihrer Trennkante 21 jeweils konkav oder im Wesentlichen konkav gekrümmt. Besonders vorteilhaft ist es, dass die Konkavität der Innenführungsflächen 19 im Wesentlichen korrespondierend zur Anatomie des zu enthäutenden Geflügelteils ausgebildet, also beispielsweise an die äußere Form der sich noch an der Geflügelkarkasse befindenden Außenfilets angepasst ist. Je nach zu verarbeitenden Geflügeltypen können die Innenführungsflächen 19 entsprechend unterschiedlich ausgeführt sein. Die Innenführungsflächen 19 sind jedenfalls vorzugsweise so eingerichtet, dass diese möglichst vollflächig mit den Außenfilets des Geflügelteils in Anlage kommen.

Weiter bevorzugt weist das Führungselement 15 eine zwischen den Innenführungsflächen 19 angeordnete Anlagefläche 22 auf, die eine von der Einzugskante 16 sich erstreckende geneigte Auflauframpe bildet. Die Anlagefläche 22 ist um einen Winkel α gegenüber einer Walzentangentiale 23 geneigt. Die Walzentangentiale 23 bezeichnete diejenige Tangentiale des Walzenumfangs, die in der XY-Ebene liegt. Anders ausgedrückt ist die Anlagefläche 22 gegenüber der XY-Ebene um den Winkel α geneigt angeordnet.

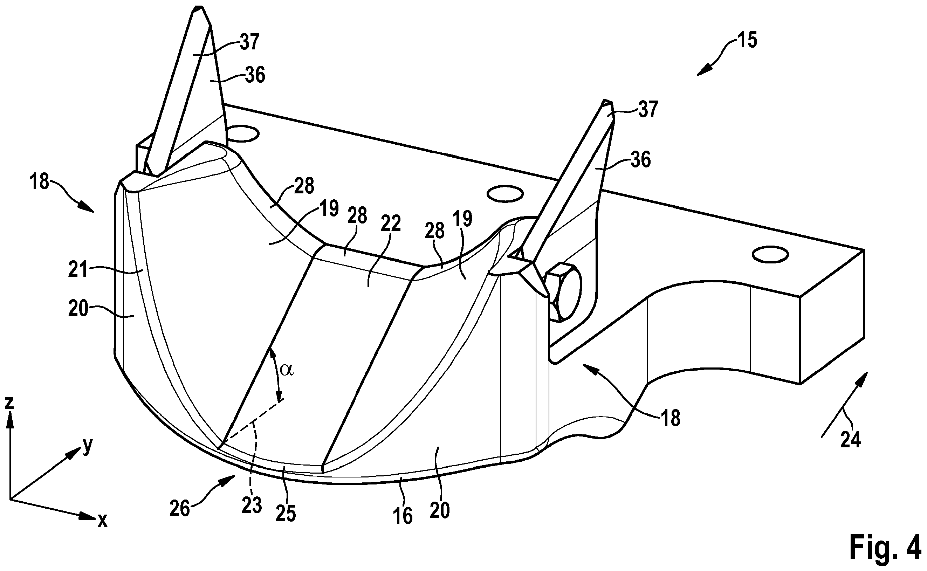

Eine solche geneigte Anlagefläche 22 ist insbesondere jeweils in den Figuren 4 bis 8 gezeigt. Die in Förderrichtung 24 geförderten Geflügelteile laufen gegen diese Anlagefläche 22. Aufgrund der Neigung der Anlagefläche 22 werden die Geflügelteile einerseits um ein gewisses Maß komprimiert und zugleich bezüglich der Z-Achse, also von der Walze 14 weg gerichtet, etwas angehoben, so dass das zuvor beschriebene "Umfließen" der Geflügelhaut um die Flankenführungselemente 18 zusätzlich unterstützt wird. Aufgrund der vergleichsweise größeren lichten Weite zwischen der Anlagefläche 22 und den Sattelelementen 13 im Eingangsbereich 26 erfolgt der Einlauf des Geflügelteils in das Führungselement 15 weitestgehend widerstandsfrei, so dass ein zuverlässiger Einlauf des Geflügelschlachtkörpers zwischen die Innenführungsflächen 19 gewährleistet ist. Die geneigte Anordnung der Anlagefläche 22 führt zu einer kontinuierlichen Verringerung der lichten Weite in Richtung des Ausgangsbereichs 27 des Führungselements 15, so dass sich der mechanische Widerstand entgegen der Förderrichtung ebenfalls kontinuierlich erhöht und die zuvor beschriebene Hebe- und Kompressionswirkung eintritt.

Vorzugsweise schließt die Trennkante 21 jeweils seitlich an die Anlageflächenkante 25 nahtlos an. Auf diese Weise bilden die Anlageflächen 22 mit der Trennkante 21 eine geschlossene, absatz- und vorsprungfreie Hüllfläche, so dass ein Herübergleiten des Geflügelschlachtkörpers ermöglicht wird. Aus denselben Gründen ist weiter bevorzugt die Anlageflächenkante 25 der als Auflauframpe ausgebildeten Anlagefläche 22 unmittelbar an die Einzugskante 16 angrenzend eingerichtet.

Vorteilhafterweise sind die Flankenführungselemente 18 insgesamt derart ausgebildet, dass die lichte Weite zwischen den Innenführungsflächen 19 sich in der Förderrichtung 24 verjüngt. Die Innenführungsflächen 19 sind folglich nicht nur in der XZ-Ebene gekrümmt ausgebildet, sondern bilden zusätzlich in der XZ-Ebene aufeinander zu gerichtete Flächen. Die Innenführungsflächen 19 können hierzu beispielsweise in XZ-Ebene schräggestellt angeordnet sein, oder wie in der Zeichnung dargestellt gewölbt ausgebildet sein. Die Innenführungsflächen 19 sind also bezüglich einer oder mehrerer Raumrichtungen gekrümmt ausgebildet.

Die Innenführungsflächen 19 der Flankenführungselemente 18 weisen jeweils Endkanten 28 auf. Vorzugsweise ist jeweils die Endkante 28 einer der Innenführungsflächen 19 kürzer als der jeweilige Abschnitt der Trennkante 21 derselben Innenführungsfläche 19. Die beschriebene Geometrie der Endkanten 28 und der jeweiligen Abschnitte der Trennkante 21 geben damit die Randgeometrie der Innenführungsflächen 19 vor. Die Innenführungsflächen 19 sind selbst als Hüllflächen ausgebildet, die sich zwischen dieser vorgegebenen Randgeometrie aufspannen. Anders ausgedrückt sind die Innenführungsflächen 19 derart eingerichtet, dass diese sich zwischen der Endkante 28 und der Trennkante 21 der jeweiligen Innenführungsfläche 19 aufspannen.

Bevorzugt ist/sind die Trennkante 21, die Anlageflächenkanten 25 und/oder die Endkanten 28 abgerundet ausgebildet. Dies bewirkt ein besseres Hinübergleiten von Haut und Geflügelteil über das Führungselement 15 und verhindert zugleich Schädigungen und Verletzungen des Muskelfleisches durch mechanische Einwirkungen, die letztlich zu einem Endprodukt geringerer Güte führen können.

Vorteilhafterweise ist die Walze 14 mittels eines - aus Gründen der besseren Übersicht nur in Fig. 3 gezeigten - Antriebsaggregats 29 derart angetrieben, dass die Umfangsgeschwindigkeit der Walze 14 größer als die Fördergeschwindigkeit der Fördereinrichtung 11 ist. So wird die in den Einzugsspalt 17 gelangte Haut - verglichen mit der Fördergeschwindigkeit des Geflügelteils - mit einer höheren Geschwindigkeit abgezogen. Auf diese Weise wird eine entsprechend hohe Zugkraft auf die Geflügelhaut ausgeübt, die sich unter der Krafteinwirkung in einem gewissen Maße elastisch verformt. Der Geschwindigkeitsunterschied wird gerade so gewählt, dass die sich entwickelnde Zugkraft groß genug ist, um die Haut in nicht mit der Geflügelkarkasse verwachsenen Bereichen von der Geflügelkarkasse zu lösen und über das Führungselement 15 gleiten zu lassen, es jedoch nicht zu einem unkontrollierten Abreißen der Haut von dem Geflügelteil oder zu einem Zerreißen der Haut kommt.

Aus der Figur 2 ist ersichtlich, dass die Walze 14 vorzugsweise im Bereich der Flankenführungselemente 18 eine gegenüber ihrer Drehachse 30 geneigte Mantelflächenprofilierung aufweist. Die Walze 14 ist in diesen Bereichen also mit einer Verzahnung versehen. Hierdurch wird erreicht, dass die Haut nicht ausschließlich in Umfangsrichtung der Walze 14 gezogen wird, sondern sich die Haut in einer weiteren Richtungskomponente, nämlich parallel zur Drehachse, auf der Umfangsfläche 32 der Walze 14 verteilt.

Besonders bevorzugt ist die Neigung der Mantelflächenprofilierung im Bereich der Flankenführungselemente 18 - und ggf. seitlich jeweils darüber hinaus - jeweils zu den Stirnseiten der Walze entgegen der Drehrichtung der Walze 14 geneigt. Dies bewirkt, dass die in den Einzugsspalt 17 gelangende Haut zusätzlich seitlich nach außen gezogen wird und sich so flächig über die Umfangsfläche 32 der Walze 14 ausbreitet.

Vorteilhafterweise weist die Walze 14 im Bereich der die Auflauframpe bildenden Anlagefläche 22 eine parallel zu der Drehachse 30 der Walze 14 ausgerichtete Mantelflächenprofilierung auf. Dies bietet den Vorteil, dass beim erstmaligen Kontakt der Haut mit der Walze 14 und der Einzugskante 16 die Haut möglichst rasch parallel zur Förderrichtung 24 in den Einzugsspalt 17 gezogen und auf diese Weise mit hoher Zuverlässigkeit gefasst wird. Nach dem der erste Hautbereich in den Einzugsspalt 17 eingezogen worden ist und sich über die gesamte Breite der parallel zu der Drehachse 30 ausgerichteten Mantelprofilierung erstreckt hat, wird das gleichmäßige Ausbreiten der Haut über die Umfangsfläche 32 der Walze über die vorgenannten Mantelprofilierungen im Bereich der Flankenführungselemente 18 bewirkt.

Die Umfangsfläche 32 der Walze 14 gliedert sich folglich in drei Bereiche. Ein innerer Bereich 33, der im Wesentlichen der Anlagefläche 22 zugeordnet ist, weist die genannte Mantelprofilierung mit parallel zu der Drehachse 30 ausgerichtetem Profil auf, während jeweils in äußeren Bereichen 34 die beschriebene, gegenüber der Drehachse 30 geneigte Mantelprofilierung eingerichtet ist.

Vorzugsweise ist die Enthäuteeinrichtung 12 relativ zu der Fördereinrichtung 11 federnd ausweichlich gelagert angeordnet. Beispielsweise ist die Enthäuteeinrichtung 12, wie in den Figuren 2 und 3 beispielhaft dargestellt, um eine Schwenkachse 35 schwenkbar angeordnet und wird über ein pneumatisches Element 40 federnd gehalten. Beim Durchlauf eines Geflügelteils durch die Enthäuteeinrichtung 12, weicht die gesamte Enthäuteeinrichtung 12 gegen die Federvorspannung durch das pneumatische Element 40 nach unten durch eine Schwenkbewegung aus, sobald das Geflügelteil das Führungselement 15 unter entsprechender Kompression durchläuft. Auf diese Weise wird die auf das Geflügelteil durch das Führungselement 15 bewirkte Kompression in gewissem Maß kompensiert, so dass die Bearbeitung von Geflügelkörpern abweichender Anatomie und Größe möglich ist. Statt des pneumatischen Elements 40 können alternativ andere Elemente mit Federwirkung, beispielsweise Zugfedern, eingesetzt werden. Das pneumatische Element 40 bietet den Vorteil, dass die Federkraft durch Druckluftbeaufschlagung einstellbar und an die jeweiligen Produktionserfordernisse optimal anpassbar eingerichtet ist. Weiter wird das pneumatische Element 40 unterstützend oder ausschließlich aktiv angesteuert, um das Ausweichen der Enthäuteeinrichtung sowie eine möglichst rasche Rückstellung desselben in die Ausgangsposition zu bewirken.

Wie in den Figuren 4 bis 8 gezeigt, umfassen die Flankenführungselemente 18 erfindungsgemäß jeweils zum Trennen der Verbindung zwischen der Haut und dem Geflügelteil eingerichtete Schneidmittel 36. Mittels der Schneidmittel 36 wird die Verbindung der Haut zur Geflügelkarkasse im Bereich der Atmungsfalte durchtrennt und so die Haut vollständig von der Karkasse gelöst. Auf diese Weise wird ein kontrollierter Schnitt ausgeführt. Im Zusammenspiel mit der durch das Führungselement 15 bewirkten exakten Führung der Geflügelkarkasse sowie der bereits vom Geflügelteil gelösten Hautpartien findet das Durchtrennen der letzten Hautverbindung präzise an exakt der richtigen Stelle statt. So wird durch eine überraschend einfache konstruktive Bauweise der erfindungsgemäßen Anordnung 10 für jede Geflügelgeometrie ein optimaler Trennschnitt ausgeführt.

Vorzugsweise sind die Schneidmittel 36 ausgangsseitig, dem Führungselement 15 bezüglich der Förderrichtung 24 nachgeordnet, angeordnet. Das Durchtrennen der Hautverbindung mittels der Schneidmittel 36 erfolgt daher erfindungsgemäß erst kurz bevor das Geflügelteil das Führungselement 15 vollständig passiert hat.

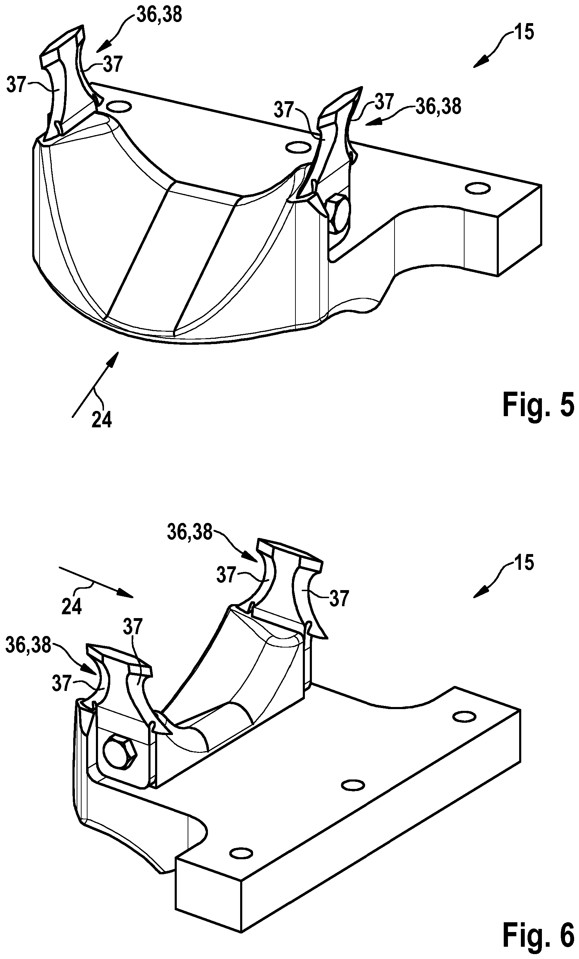

Die Schneidkanten 37 jedes der Schneidmittel 36 sind gegenüber der Förderrichtung 24 vorzugsweise geneigt ausgebildet. Gemäß dem in Figur 4 gezeigten Ausführungsbeispiel sind die Messer als Dreieckmesser ausgeführt. Alternativ sind die Schneidmittel 36, wie in den Figuren 5 und 6 gezeigt, mit einer sichelförmigen Schneidkante 37 ausgebildet. Dies bietet den Vorteil, dass sich die mit der Karkasse verwachsene Haut in der konkaven Schneidkantenform "verfängt". So wird sichergestellt, dass in jedem Fall eine Durchtrennung der Hautverbindung mittels der Schneidmittel 36 erfolgt. Die Haut kann also nicht ohne vollständig durchtrennt zu werden über die Schneidkante 37 rutschen.

Wie in den Figuren 5 bis 8 ersichtlich sind die Schneidmittel 36 bevorzugt jeweils als Doppelmesser 38 ausgebildet, weisen also jeweils auf deren Vorder- als auch Rückseiten Schneidkanten 37 auf. Dies bietet den Vorteil, dass eine stumpfe Schneidkante 37 durch Drehen des Schneidmittels 36 um 180° auf einfache Weise getauscht werden kann, ohne das gesamte Schneidmittel 36 austauschen zu müssen.

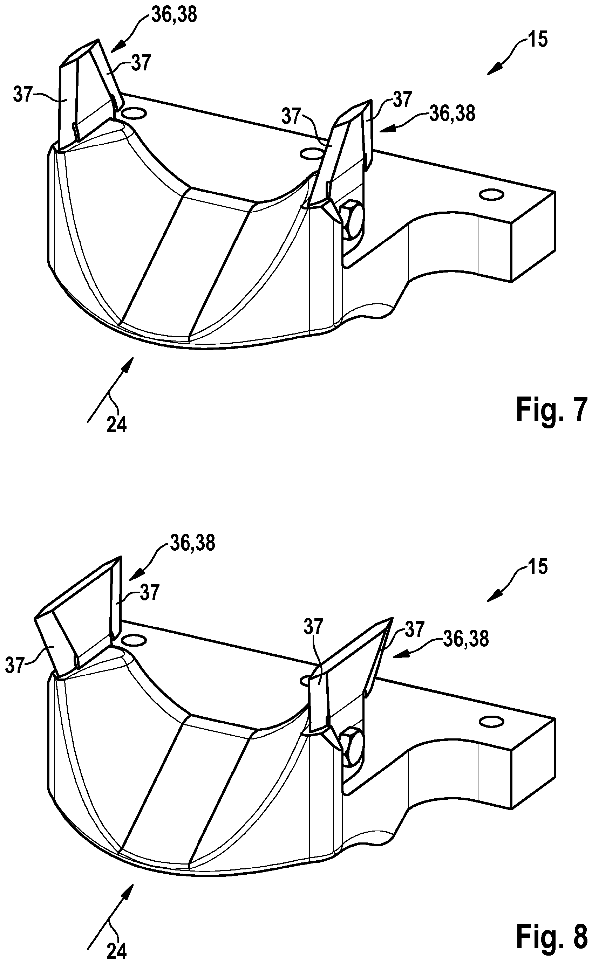

Wie in Figur 8 gezeigt, ist gemäß einer weiteren vorteilhaften Ausgestaltung der Erfindung vorgesehen, dass die Schneidkante 37 so geneigt ist, dass sich die Schneidkanten 37 ausgehend von dem Flankenführungselement 18 gegen die Förderrichtung 24 erstrecken. Auf diese Weise wird eine zu der Ausführungsvariante mit einer sichelförmigen Schneidkante 37 vergleichbare Funktion erzielt, nämlich die Haut an einem Übergleiten des Schneidmittel 37, ohne dass es zu einer vollständigen Durchtrennung der Hautpartie kommt, zu hindern. Weiter bevorzugt sind die Schneidkanten jeweils beidseitig angefast ausgebildet.

So wird ein optimaler Anschnitt der zu durchtrennenden Hautpartie gewährleistet und zugleich ein unerwünschtes Einschneiden in die Geflügelfilets vermieden. Alternativ sind die Schneidmittel 36 quer zu der Förderrichtung 24 federnd ausweichlich gelagert (nicht in der Zeichnung gezeigt). Die Schneidmittel 36 weichen so seitlich aus, sofern die Breite des Schlachtgeflügelkörpers dies erfordert. Die Schneidmittel 36 sind also sich an das Geflügelteil selbstadaptierend eingerichtet.

Das erfindungsgemäße Verfahren wird im Zusammenhang mit der zuvor beschriebenen Anordnung ebenfalls beschrieben. Ergänzend sind einige ausgewählte Aspekte des erfindungsgemäßen Verfahrens nachfolgend ergänzend beschrieben.

Das erfindungsgemäße Verfahren zum Enthäuten von die Geflügelbrust enthaltenden Geflügelteilen umfasst die Schritte: Fördern der Geflügelteile in Förderrichtung 24 längs der Enthäuteeinrichtung 12 mittels der Sattelelemente 13 der Fördereinrichtung 11, rotierendes Antreiben mindestens einer profilierten Walze 14, wobei die Walze 14 zusammen mit einer Einzugskante 16 eines Führungselements 15 einen Einzugsspalt 17 zum geflügelbrustseitigen Fassen der Haut bildet. Die Haut wird selbsttätig mittels des Einzugsspalts 17 gefasst, während das Geflügelteil jeweils seitlich mittels Flankenführungselementen 18 geführt wird. Die Führung erfolgt durch Anlage von Innenführungsflächen 19 am Muskelfleisch des Geflügelteils.

Das Führen der geflügelteilseitig verbundenen Haut erfolgt bevorzugt mittels der Außenführungsflächen 20 der Flankenführungselemente 18, die sich jeweils zwischen der Einzugskante 16 und einer Trennkante 21, an der jeweils die Innenführungsfläche 19 an die Außenführungsführungsfläche 20 grenzt, erstrecken.

Vorteilhafterweise werden zumindest Teilbereiche des Geflügelteils durch Fördern desselben über eine Auflauframpe elastisch gestaucht, wobei die Auflauframpe durch eine zwischen den Innenführungsflächen 19 angeordnete Anlagefläche 22 gebildet ist. Die Anlagefläche 22 der Auflauframpe ist dabei ausgehend von der Einzugskante 16 um einen Winkel α gegenüber einer Walzentangentiale 23 geneigt angeordnet.

Bevorzugt wird das Geflügelteil seitlich quer zu der Förderrichtung 24 mittels der Flankenführungselemente 18, deren lichte Weite zwischen den Innenführungsflächen 19 sich in Förderrichtung 24 verjüngt, zusätzlich quer gestaucht.

Weiter bevorzugt erfolgt das Antreiben der Walze 14 mittels eines Antriebsaggregats 29, so dass die Umfangsgeschwindigkeit der Walze 14 größer als die Fördergeschwindigkeit der Fördereinrichtung 11 ist.

Vorteilhafterweise erfolgt das Abziehen der Haut zumindest mit einer Teilkomponente in Richtung der Stirnseiten 39 der Walze 14 mittels einer Mantelflächenprofilierung der Walze 14 im Bereich der Flankenführungselemente 18, die gegenüber der Drehachse 30 der Walze 14 geneigt ausgerichtet ist. Insbesondere erfolgt das Einziehen der Haut in den Einzugsspalt 17 im Bereich der Auflauframpe in Umlaufrichtung der Walze 14 mittels einer parallel zu der Drehachse 30 der Walze 14 ausgerichteten Mantelflächenprofilierung.

Vorzugsweise weicht die Enthäuteeinrichtung 12 relativ zu der Fördereinrichtung 11 beim Passieren eines der Geflügelteile bzw. eines Geflügelschlachtkörpers federn aus.

## Patentansprüche

1. Anordnung (10) zum Enthäuten von die Geflügelbrust enthaltenden Geflügelteilen, mit
einer Fördereinrichtung (11), die zum Fördern der Geflügelteile in Förderrichtung (24) längs einer Enthäuteeinrichtung (12) ausgebildete Sattelelemente (13) umfasst, und
die Enthäuteeinrichtung (12) mindestens eine rotierend angetriebene profilierte Walze (14) sowie ein Führungselement (15) umfasst, wobei die Walze (14) zusammen mit einer Einzugskante (16) des Führungselements (15) eingerichtet ist, einen Einzugsspalt (17) zum geflügelbrustseitigen Fassen der Haut zu bilden,
wobei
das Führungselement (15) jeweils zur seitlichen Führung des Geflügelteils eingerichtete Flankenführungselemente (18) umfasst, und wobei die Flankenführungselemente (18) zur Anlage am Muskelfleisch des Geflügelteils eingerichtete Innenführungsflächen (19) aufweisen,
**dadurch gekennzeichnet, dass**
die Flankenführungselemente (18) jeweils zum Trennen der Verbindung zwischen der Haut und dem Geflügelteil eingerichtete Schneidmittel (36) umfassen.

2. Anordnung nach Anspruch 1, **dadurch gekennzeichnet, dass** die Flankenführungselemente (18) jeweils zum Führen der geflügelteilseitig verbundenen Haut eingerichtete Außenführungsflächen (20) umfassen, wobei die Außenführungsflächen (20) sich jeweils zwischen der Einzugskante (16) und einer Trennkante (21), an der jeweils die Innenführungsfläche (19) an die Außenführungsfläche (20) grenzt, erstrecken.

3. Anordnung nach Anspruch 2, **dadurch gekennzeichnet, dass** die Innenführungsflächen (19) mit ihrer Trennkante (21) jeweils zumindest im Wesentlich konkav gekrümmt sind.

4. Anordnung nach einem der Ansprüche 1 bis 3, **dadurch gekennzeichnet, dass** das Führungselement (15) eine zwischen den Innenführungsflächen (19) angeordnete Anlagefläche (22) umfasst, wobei die Anlagefläche (22) ausgehend von der Einzugskante (16) eine um einen Winkel α gegenüber einer Walzentangentiale (23) geneigte Auflauframpe bildet.

5. Anordnung nach einem der Ansprüche 2 bis 4, **dadurch gekennzeichnet, dass** die Trennkante (21) jeweils seitlich an die Anlageflächenkante (25) nahtlos anschließt.

6. Anordnung nach Anspruch 5, **dadurch gekennzeichnet, dass** die Anlageflächenkante (25) der Anlagefläche (22) unmittelbar an die Einzugskante (16) angrenzend eingerichtet ist.

7. Anordnung nach einem der Ansprüche 1 bis 4, **dadurch gekennzeichnet, dass** die Flankenführungselemente (18) derart ausgebildet sind, dass die lichte Weite zwischen den Innenführungsflächen (19) sich in der Förderrichtung (24) verjüngt.

8. Anordnung nach einem der Ansprüche 1 bis 7, **dadurch gekennzeichnet, dass** die Innenführungsflächen (19) der Flankenführungselemente (18) jeweils eine Endkante (28) aufweisen, wobei jeweils die Endkante (28) einer der Innenführungsflächen (19) kürzer als der jeweilige Abschnitt der Trennkante (21) derselben Innenführungsfläche ist.

9. Anordnung nach Anspruch 8, **dadurch gekennzeichnet, dass** jede der Innenführungsflächen (19) als Hüllfläche ausgebildet ist, die sich zwischen der Endkante (28) und der Trennkante (21) der jeweiligen Innenführungsfläche (19) aufspannt.

10. Anordnung nach Anspruch 8 oder 9, **dadurch gekennzeichnet, dass** die Trennkante (21), die Anlageflächenkanten (25) und/oder die Endkanten (28) abgerundet ausgebildet sind.

11. Anordnung nach einem der Ansprüche 1 bis 10, **dadurch gekennzeichnet**, die Walze 14 mittels eines Antriebsaggregats (29) derart angetrieben ist, dass die Umfangsgeschwindigkeit der Walze (14) größer als die Fördergeschwindigkeit der Fördereinrichtung (11) ist.

12. Anordnung nach einem der Ansprüche 1 bis 11, **dadurch gekennzeichnet, dass** die Walze (14) im Bereich der Flankenführungselemente (18) eine gegenüber ihrer Drehachse (30) geneigte Mantelflächenprofilierung aufweist.

13. Anordnung nach Anspruch 12, **dadurch gekennzeichnet, dass** die Mantelflächenprofilierungen im Bereich der Flankenführungselemente (18) jeweils zu den Stirnseiten (39) der Walze (14) entgegen der Drehrichtung der Walze (14) geneigt sind.

14. Anordnung nach einem der Ansprüche 4 bis 13, **dadurch gekennzeichnet, dass** die Walze (14) im Bereich der die Auflauframpe bildenden Anlagefläche (22) eine parallel zu der Drehachse (30) der Walze (14) ausgerichtete Mantelflächenprofilierung aufweist.

15. Anordnung nach einem der Ansprüche 1 bis 14, **dadurch gekennzeichnet, dass** die Enthäuteeinrichtung (12) relativ zu der Fördereinrichtung (11) federnd ausweichlich gelagert angeordnet ist.

16. Anordnung nach einem der Ansprüche 1 bis 15, **dadurch gekennzeichnet, dass** die Schneidmittel (36) ausgangsseitig, dem Führungselement (15) bezüglich der Förderrichtung (24) nachgeordnet, angeordnet sind.

17. Anordnung nach einem der Ansprüche 1 bis 15, **dadurch gekennzeichnet, dass** jedes der Schneidmittel (36) eine Schneidkante (37) aufweist, die gegenüber der Förderrichtung (24) geneigt ausgebildet sind.

18. Anordnung nach Anspruch 17, **dadurch gekennzeichnet, dass** die Schneidkante (37) sichelförmig ausgebildet ist.

19. Anordnung nach Anspruch 17 oder 18, **dadurch gekennzeichnet, dass** die Schneidkanten (37) jeweils beidseitig angefast ausgebildet sind.

20. Anordnung nach einem der Ansprüche 1 bis 19, **dadurch gekennzeichnet, dass** die Schneidmittel (36) quer zu der Förderrichtung (24) federnd ausweichlich gelagert sind.

21. Verfahren zum Enthäuten von die Geflügelbrust enthaltenden Geflügelteilen, umfassend die Schritte:
Fördern der Geflügelteile in Förderrichtung (24) längs einer Enthäuteeinrichtung (12) mittels Sattelelementen (13) einer Fördereinrichtung (11),
rotierendes Antreiben mindestens einer profilierten Walze (14), wobei die Walze (14) zusammen mit einer Einzugskante (16) eines Führungselements (15) einen Einzugsspalt (17) zum geflügelbrustseitigen Fassen der Haut bildet, selbsttätiges Fassen der Haut mittels des Einzugsspalts (17),
und
jeweils seitliches Führen des Geflügelteils mittels Flankenführungselementen (18) durch Anlage von Innenführungsflächen (19) am Muskelfleisch des Geflügelteils,
**gekennzeichnet durch**
Trennen der verbleibenden Verbindung zwischen der Haut und dem Geflügelteil mittels Schneidmitteln (36),
wobei das Trennen ausgangsseitig, also unmittelbar bevor das Geflügelteil das Führungselement (15) vollständig passiert hat, erfolgt.

22. Verfahren nach Anspruch 21, **gekennzeichnet durch** Führen der geflügelteilseitig verbundenen Haut mittels Außenführungsflächen (20) der Flankenführungselemente (18), die sich jeweils zwischen der Einzugskante (16) und einer Trennkante (21), an der jeweils die Innenführungsfläche (19) an die Außenführungsführungsfläche (20) grenzt, erstrecken.

23. Verfahren nach Anspruch 21 oder 22, **gekennzeichnet durch** elastisches Stauchen zumindest von Teilbereichen des Geflügelteils durch Fördern desselben über eine Auflauframpe, die durch eine zwischen den Innenführungsflächen (19) angeordnete Anlagefläche (22) gebildet ist, wobei die Anlagefläche (22) der Auflauframpe ausgehend von der Einzugskante (16) um einen Winkel α gegenüber einer Walzentangentiale (23) geneigt ist.

24. Verfahren nach einem der Ansprüche 21 bis 23, **gekennzeichnet durch** seitliches Stauchen des Geflügelteils quer zu der Förderrichtung (24) mittels der Flankenführungselemente (18), deren lichte Weite zwischen den Innenführungsflächen (19) sich in Förderrichtung (24) verjüngt.

25. Verfahren nach einem der Ansprüche 21 bis 24, **gekennzeichnet durch** Antreiben der Walze (14) mittels eines Antriebsaggregats (29), so dass die Umfangsgeschwindigkeit der Walze (14) größer als die Fördergeschwindigkeit der Fördereinrichtung (11) ist.

26. Verfahren nach einem der Ansprüche 21 bis 25 **gekennzeichnet durch** Abziehen der Haut zumindest mit einer Teilkomponente in Richtung der Stirnseiten (39) der Walze (14) mittels einer Mantelflächenprofilierung der Walze (14) im Bereich der Flankenführungselemente (18), die gegenüber der Drehachse (30) der Walze (14) geneigt ausgerichtet ist.

27. Verfahren nach einem der Ansprüche 21 bis 26, **gekennzeichnet durch** Einziehen der Haut in den Einzugsspalt (17) im Bereich der Auflauframpe in Umlaufrichtung der Walze (14) mittels einer parallel zu der Drehachse (30) der Walze (14) ausgerichteten Mantelflächenprofilierung.

28. Verfahren nach einem der Ansprüche 21 bis 27, **gekennzeichnet durch** federndes Ausweichen der Enthäuteeinrichtung (12) relativ zu der Fördereinrichtung (11) beim Passieren eines der Geflügelkörper.

29. Verfahren nach einem der Ansprüche 21 bis 28, **gekennzeichnet dadurch, dass** das Trennen mittels Schneidmitteln (36) erfolgt, die eine gegenüber der Förderrichtung (24) geneigte Schneidkante (37) aufweisen.

30. Verfahren nach einem der Ansprüche 21 bis 29, **gekennzeichnet durch** federndes Ausweichen der Schneidmittel (36) quer zu der Förderrichtung (24).

## Claims

1. Arrangement (10) for skinning poultry parts containing the poultry breast, having
a conveying device (11) which comprises saddle elements (13) configured for conveying the poultry parts in a conveying direction (24) along a skinning device (12), and
the skinning device (12) comprising at least one rotationally driven profiled roller (14) and a guide element (15), wherein the roller (14), together with an entry edge (16) of the guide element (15), is adapted to form an entry gap (17) for gripping the skin on the poultry breast side,
wherein
the guide element (15) comprises flank guide elements (18) each adapted for laterally guiding the poultry part, wherein the flank guide elements (18) have inner guide surfaces (19) adapted for contacting the flesh of the poultry part
**characterized in that**
the flank guide elements (18) each comprise cutting means (36) adapted for separating the connection between the skin and the poultry part.

2. Arrangement according to claim 1, **characterised in that** the flank guide elements (18) each comprise outer guide surfaces (20) which are adapted for guiding the skin connected on the poultry part side, wherein the outer guide surfaces (20) in each case extend between the entry edge (16) and a separating edge (21), at which in each case the inner guide surface (19) adjoins the outer guide surface (20).

3. Arrangement according to claim 2, **characterised in that** the inner guide surfaces (19) with their separating edge (21) are each curved at least substantially concavely.

4. Arrangement according to any one of claims 1 to 3, **characterised in that** the guide element (15) comprises a contact surface (22) arranged between the inner guide surfaces (19), wherein the contact surface (22), starting from the entry edge (16), forms a run-on ramp which is inclined by an angle α relative to a roller tangential (23).

5. Arrangement according to any one of claims 2 to 4, **characterised in that** the separating edge (21) in each case laterally adjoins the contact surface edge (25) seamlessly.

6. Arrangement according to claim 5, **characterised in that** the contact surface edge (25) of the contact surface (22) is adapted to adjoin the entry edge (16) directly.

7. Arrangement according to any one of claims 1 to 4, **characterised in that** the flank guide elements (18) are so configured that the clear width between the inner guide surfaces (19) tapers in the conveying direction (24).

8. Arrangement according to any one of claims 1 to 7, **characterised in that** the inner guide surfaces (19) of the flank guide elements (18) each have an end edge (28), wherein in each case the end edge (28) of one of the inner guide surfaces (19) is shorter than the respective portion of the separating edge (21) of the same inner guide surface.

9. Arrangement according to claim 8, **characterised in that** each of the inner guide surfaces (19) is configured as an enveloping surface which spans the region between the end edge (28) and the separating edge (21) of the respective inner guide surface (19).

10. Arrangement according to claim 8 or 9, **characterised in that** the separating edge (21), the contact surface edges (25) and/or the end edges (28) are in rounded form.

11. Arrangement according to any one of claims 1 to 10, **characterised in that** the roller (14) is driven by means of a drive unit (29) in such a manner that the circumferential speed of the roller (14) is greater than the conveying speed of the conveying device (11).

12. Arrangement according to any one of claims 1 to 11, **characterised in that**, in the region of the flank guide elements (18), the roller (14) has a peripheral surface profile which is inclined relative to its axis of rotation (30).

13. Arrangement according to claim 12, **characterised in that** the peripheral surface profiles in the region of the flank guide elements (18) are each inclined to the end faces (39) of the roller (14) contrary to the direction of rotation of the roller (14).

14. Arrangement according to any one of claims 4 to 13, **characterised in that**, in the region of the contact surface (22) forming the run-on ramp, the roller (14) has a peripheral surface profile oriented parallel to the axis of rotation (30) of the roller (14).

15. Arrangement according to any one of claims 1 to 14, **characterised in that** the skinning device (12) is arranged mounted to be resiliently deflectable relative to the conveying device (11).

16. Arrangement according to one of claims 1 to 15, **characterised in that** the cutting means (36) are arranged on the exit side, downstream of the guide element (15) relative to the conveying direction (24).

17. Arrangement according to one of claims 1 to 15, **characterised in that** each of the cutting means (36) has a cutting edge (37), which cutting edges are configured to be inclined relative to the conveying direction (24).

18. Arrangement according to claim 17, **characterised in that** the cutting edge (37) is sickle-shaped.

19. Arrangement according to claim 17 or 18, **characterised in that** the cutting edges (37) are each bevelled on both sides.

20. Arrangement according to any one of claims 1 to 19, **characterised in that** the cutting means (36) are mounted to be resiliently deflectable transversely to the conveying direction (24).

21. Method for skinning poultry parts containing the poultry breast, comprising the steps:
conveying the poultry parts in a conveying direction (24) along a skinning device (12) by means of saddle elements (13) of a conveying device (11),
driving at least one profiled roller (14) in rotation, wherein the roller (14), together with an entry edge (16) of a guide element (15), forms an entry gap (17) for gripping the skin on the poultry breast side,
automatically gripping the skin by means of the entry gap (17),
and
in each case lateral guiding of the poultry part by means of flank guide elements (18), by contact of inner guide surfaces (19) with the flesh of the poultry part.
**characterised by**
separating the remaining connection between the skin and the poultry part by means of cutting means (36),
the separation taking place on the exit side, that is to say immediately before the poultry part has passed through the guide element (15) completely.

22. Method according to claim 21, **characterised by** guiding of the skin connected on the poultry part side by means of outer guide surfaces (20) of the flank guide elements (18) which in each case extend between the entry edge (16) and a separating edge (21), at which in each case the inner guide surface (19) adjoins the outer guide surface (20).

23. Method according to claim 21 or 22, **characterised by** elastic squeezing at least of part-regions of the poultry part by conveying the poultry part over a run-on ramp which is formed by a contact surface (22) arranged between the inner guide surfaces (19), wherein the contact surface (22) of the run-on ramp, starting from the entry edge (16), is inclined by an angle α relative to a roller tangential (23).

24. Method according to any one of claims 21 to 23, **characterised by** lateral squeezing of the poultry part transversely to the conveying direction (24) by means of the flank guide elements (18), the clear width of which between the inner guide surfaces (19) tapers in the conveying direction (24).

25. Method according to any one of claims 21 to 24, **characterised by** driving of the roller (14) by means of a drive unit (29), so that the circumferential speed of the roller (14) is greater than the conveying speed of the conveying device (11).

26. Method according to any one of claims 21 to 25, **characterised by** removal of the skin at least with a sub-component in the direction of the end faces (39) of the roller (14) by means of a peripheral surface profile of the roller (14) in the region of the flank guide elements (18) which is oriented inclined relative to the axis of rotation (30) of the roller (14).

27. Method according to any one of claims 21 to 26, **characterised by** pulling of the skin into the entry gap (17) in the region of the run-on ramp in the direction of rotation of the roller (14) by means of a peripheral surface profile oriented parallel to the axis of rotation (30) of the roller (14).

28. Method according to any one of claims 21 to 27, **characterised by** resilient deflection of the skinning device (12) relative to the conveying device (11) as one of the poultry bodies passes through.

29. Method according to any one of claims 21 to 28, **characterised in that** the separation takes place by means of cutting means (36) having a cutting edge (37) which is inclined relative to the conveying direction (24).

30. Method according to any one of claims 21 to 29, **characterised by** resilient deflection of the cutting means (36) transversely to the conveying direction (24).

## Revendications

1. Agencement (10) pour dépouiller des parties de volaille contenant la poitrine de volaille, avec
un dispositif de transport (11) qui comprend des éléments de selle (13) configurés le long d'un dispositif de dépouillement (12) pour transporter les parties de volaille dans la direction de transport (24), et
le dispositif de dépouillement (12) comprend au moins un cylindre profilé (14) entraîné en rotation ainsi qu'un élément de guidage (15), le cylindre (14) étant adapté, conjointement avec un bord d'introduction (16) de l'élément de guidage (15), pour former une fente d'introduction (17) pour saisir la peau du côté de la poitrine de volaille,
l'élément de guidage (15) comprenant des éléments de guidage de flanc (18) adaptés respectivement pour le guidage latéral de la partie de volaille, et les éléments de guidage de flanc (18) présentant des surfaces de guidage intérieures (19) adaptées pour s'appuyer sur la chair musculaire de la partie de volaille,
**caractérisé en ce que**
les éléments de guidage de flanc (18) comprennent respectivement des moyens de coupe (36) adaptés pour séparer la liaison entre la peau et la partie de volaille.

2. Agencement selon la revendication 1, **caractérisé en ce que** les éléments de guidage de flanc (18) comprennent respectivement des surfaces de guidage extérieures (20) adaptées pour guider la peau reliée du côté de la partie de volaille, les surfaces de guidage extérieures (20) s'étendant respectivement entre le bord d'introduction (16) et un bord de séparation (21) au niveau duquel la surface de guidage intérieure (19) est respectivement adjacente à la surface de guidage extérieure (20).

3. Agencement selon la revendication 2, **caractérisé en ce que** les surfaces de guidage intérieures (19) sont chacune incurvées de manière au moins essentiellement concave avec leur bord de séparation (21).

4. Agencement selon l'une quelconque des revendications 1 à 3, **caractérisé en ce que** l'élément de guidage (15) comprend une surface d'appui (22) agencée entre les surfaces de guidage intérieures (19), la surface d'appui (22) formant, à partir du bord d'introduction (16), une rampe de montée inclinée d'un angle α par rapport à une tangente au cylindre (23).

5. Agencement selon l'une quelconque des revendications 2 à 4, **caractérisé en ce que** le bord de séparation (21) se raccorde chaque fois latéralement au bord de surface d'appui (25) sans soudure.

6. Agencement selon la revendication 5, **caractérisé en ce que** le bord de surface d'appui (25) de la surface d'appui (22) est adapté de manière à être directement adjacent au bord d'introduction (16).

7. Agencement selon l'une quelconque des revendications 1 à 4, **caractérisé en ce que** les éléments de guidage de flanc (18) sont configurés de telle sorte que la largeur libre entre les surfaces de guidage intérieures (19) se rétrécit dans la direction de transport (24).

8. Agencement selon l'une quelconque des revendications 1 à 7, **caractérisé en ce que** les surfaces de guidage intérieures (19) des éléments de guidage de flanc (18) présentent respectivement un bord d'extrémité (28), le bord d'extrémité (28) de l'une des surfaces de guidage intérieures (19) étant respectivement plus court que la section respective du bord de séparation (21) de la même surface de guidage intérieure.

9. Agencement selon la revendication 8, **caractérisé en ce que** chacune des surfaces de guidage intérieures (19) est configurée sous forme de surface enveloppante qui s'étend entre le bord d'extrémité (28) et le bord de séparation (21) de la surface de guidage intérieure respective (19).

10. Agencement selon la revendication 8 ou 9, **caractérisé en ce que** le bord de séparation (21), les bords de surface d'appui (25) et/ou les bords d'extrémité (28) sont configurés sous forme arrondie.

11. Agencement selon l'une quelconque des revendications 1 à 10, **caractérisé en ce que** le cylindre (14) est entraîné au moyen d'un groupe d'entraînement (29) de telle sorte que la vitesse périphérique du cylindre (14) est supérieure à la vitesse de transport du dispositif de transport (11).

12. Agencement selon l'une quelconque des revendications 1 à 11, **caractérisé en ce que** le cylindre (14) présente, dans la zone des éléments de guidage de flanc (18), un profilage de surface d'enveloppe incliné par rapport à son axe de rotation (30).

13. Agencement selon la revendication 12, **caractérisé en ce que** les profilages de surface d'enveloppe dans la zone des éléments de guidage de flanc (18) sont respectivement inclinés vers les côtés frontaux (39) du cylindre (14) à l'encontre de la direction de rotation du cylindre (14).

14. Agencement selon l'une quelconque des revendications 4 à 13, **caractérisé en ce que** le cylindre (14) présente, dans la zone de la surface d'appui (22) formant la rampe de montée, un profilage de surface d'enveloppe orienté parallèlement à l'axe de rotation (30) du cylindre (14).

15. Agencement selon l'une quelconque des revendications 1 à 14, **caractérisé en ce que** le dispositif de dépouillement (12) est agencé en étant monté de manière à pouvoir s'écarter élastiquement par rapport au dispositif de transport (11).

16. Agencement selon l'une quelconque des revendications 1 à 15, **caractérisé en ce que** les moyens de coupe (36) sont agencés du côté de la sortie, en aval de l'élément de guidage (15) par rapport à la direction de transport (24).

17. Agencement selon l'une quelconque des revendications 1 à 15, **caractérisé en ce que** chacun des moyens de coupe (36) présente un bord de coupe (37) qui est configuré sous forme inclinée par rapport à la direction de transport (24).

18. Agencement selon la revendication 17, **caractérisé en ce que** le bord de coupe (37) est configuré en forme de croissant.

19. Agencement selon la revendication 17 ou 18, **caractérisé en ce que** les bords de coupe (37) sont respectivement configurés avec un chanfrein des deux côtés.

20. Agencement selon l'une quelconque des revendications 1 à 19, **caractérisé en ce que** les moyens de coupe (36) sont montés de manière à pouvoir s'écarter élastiquement transversalement à la direction de transport (24).

21. Procédé de dépouillement de parties de volaille contenant la poitrine de volaille, comprenant les étapes :
le transport des parties de volaille dans la direction de transport (24) le long d'un dispositif de dépouillement (12) au moyen d'éléments de selle (13) d'un dispositif de transport (11),
l'entraînement en rotation d'au moins un cylindre profilé (14), le cylindre (14) formant conjointement avec un bord d'introduction (16) d'un élément de guidage (15) une fente d'introduction (17) pour saisir la peau du côté de la poitrine de volaille,
la saisie automatique de la peau au moyen de la fente d'introduction (17),
et
le guidage latéral respectif de la partie de volaille au moyen d'éléments de guidage de flanc (18) par appui de surfaces de guidage intérieures (19) sur la chair musculaire de la partie de volaille,
**caractérisé par**
la séparation de la liaison restante entre la peau et la partie de volaille au moyen de moyens de coupe (36),
la séparation étant effectuée du côté de la sortie, c'est-à-dire juste avant que la partie de volaille n'ait complètement passé l'élément de guidage (15).

22. Procédé selon la revendication 21, **caractérisé par** le guidage de la peau reliée du côté de la partie de volaille au moyen de surfaces de guidage extérieures (20) des éléments de guidage de flanc (18), qui s'étendent respectivement entre le bord d'introduction (16) et un bord de séparation (21), au niveau duquel la surface de guidage intérieure (19) est respectivement adjacente à la surface de guidage extérieure (20).

23. Procédé selon la revendication 21 ou 22, **caractérisé par** un refoulement élastique d'au moins des zones partielles de la partie de volaille par transport de celle-ci sur une rampe de montée formée par une surface d'appui (22) agencée entre les surfaces de guidage intérieures (19), la surface d'appui (22) de la rampe de montée étant inclinée d'un angle α par rapport à une tangente au cylindre (23) en partant du bord d'introduction (16).

24. Procédé selon l'une quelconque des revendications 21 à 23, **caractérisé par** un refoulement latéral de la partie de volaille, transversalement à la direction de transport (24), au moyen des éléments de guidage de flanc (18) dont la largeur libre entre les surfaces de guidage intérieures (19) se rétrécit dans la direction de transport (24).

25. Procédé selon l'une quelconque des revendications 21 à 24, **caractérisé par** l'entraînement du cylindre (14) au moyen d'un groupe d'entraînement (29) de telle sorte que la vitesse périphérique du cylindre (14) est supérieure à la vitesse de transport du dispositif de transport (11).

26. Procédé selon l'une quelconque des revendications 21 à 25, **caractérisé par** le retrait de la peau, au moins avec une composante partielle, en direction des côtés frontaux (39) du cylindre (14) au moyen d'un profilage de surface d'enveloppe du cylindre (14) dans la zone des éléments de guidage de flanc (18), qui est orienté de manière inclinée par rapport à l'axe de rotation (30) du cylindre (14).

27. Procédé selon l'une quelconque des revendications 21 à 26, **caractérisé par** l'introduction de la peau dans la fente d'introduction (17) dans la zone de la rampe de montée dans la direction circonférentielle du cylindre (14) au moyen d'un profilage de surface d'enveloppe orienté parallèlement à l'axe de rotation (30) du cylindre (14).

28. Procédé selon l'une quelconque des revendications 21 à 27, **caractérisé par** un écartement élastique du dispositif de dépouillement (12) par rapport au dispositif de transport (11) lors du passage de l'une des carcasses de volaille.

29. Procédé selon l'une quelconque des revendications 21 à 28, **caractérisé en ce que** la séparation est effectuée au moyen de moyens de coupe (36) présentant un bord de coupe (37) incliné par rapport à la direction de transport (24).

30. Procédé selon l'une quelconque des revendications 21 à 29, **caractérisé par** un écartement élastique des moyens de coupe (36) transversalement à la direction de transport (24).
